# EUROPEAN PATENT SPECIFICATION

(11) **EP 3 993 192 B1**
(45) Date of publication and mention of the grant of the patent: **22.01.2025**
(21) Application number: 19934674.3
(22) Date of filing: 27.06.2019
(51) Int. Cl.: H02B 3/00, H02B 13/00

(54) **EXHAUST TOOL AND METHOD FOR MANUFACTURING A SWITCHING DEVICE USING SUCH TOOL**
ENTLÜFTUNGSWERKZEUG UND VERFAHREN ZUR HERSTELLUNG EINER SCHALTANLAGE UNTER VERWENDUNG DIESES WERKZEUGS
OUTIL D'ÉVACUATION DE L'AIR ET PROCÉDÉ DE FABRICATION D'UN DISPOSITIF DE COMMUTATION UTILISANT UN TEL OUTIL

(43) Date of publication of application: 04.05.2022
(73) Proprietor: MITSUBISHI ELECTRIC CORPORATION, Chiyoda-ku Tokyo 100-8310 (JP)
(72) Inventor: YAMADA, Shintaro, Tokyo 100-8310 (JP); TSURIMOTO, Takao, Tokyo 100-8310 (JP); MORITO, Eiji, Tokyo 100-8310 (JP); KUROAKI, Shintaro, Tokyo 102-0073 (JP)
(74) Representative: Witte, Weller & Partner Patentanwälte mbB
(86) International application number: PCT/JP2019/025583
(87) International publication number: WO 2020/261482

(56) References cited:
- WO-A1-2017/022618
- WO-A1-2017/022618
- WO-A1-2018/235162
- CN-U- 207 994 556

## Description

### TECHNICAL FIELD

The present disclosure relates to an exhaust tool used for assembly of a bus connection portion of a switching device used for grid operation of power receiving/distributing equipment or the like.

### BACKGROUND ART

In a switching device used for grid operation of power receiving/distributing equipment or the like, it is necessary to inhibit remaining of gas, for preventing reduction in insulation performance of the bus connection portion. Conventionally, in assembly of the bus connection portion, for example, a gas removing tool having an exhaust hole is inserted into the bus connection portion, and while a tightening member such as a screw is rotated, gas compressed in the bus connection portion is exhausted through the exhaust hole, thereby preventing remaining of the gas (see, for example, Patent Document 1).

Patent Document discloses another example of the use of exhaust tools on insulated bus assemblies.

### CITATION LIST

### PATENT DOCUMENT

Patent Document 1: WO 2017/022618 A1
Patent Document 2: CN 207 994 556 U

### SUMMARY OF THE INVENTION

### PROBLEMS TO BE SOLVED BY THE INVENTION

However, in a process when the gas removing tool is inserted between an insulating plug and a connector of the bus connection portion and the insulating plug is rotated and fitted into the connector, the gas removing tool moves so as to follow rotation of the insulating plug, so that the gas removing tool is displaced to hamper gas passage through the exhaust hole, thus causing a problem that the gas cannot be exhausted sufficiently.

The present disclosure has been made to solve the above problem, and an object of the present disclosure is to provide an exhaust tool and a switching device manufacturing method using the exhaust tool that, in assembly of a bus connection portion of a switching device, prevent displacement of a tool used for exhausting gas, and efficiently exhaust gas between a connector and an insulating plug, thereby inhibiting remaining of the gas.

### SOLUTION TO THE PROBLEMS

Therefore, there are provided an exhaust tool and a switching device manufacturing method according to the independent claims.

### EFFECT OF THE INVENTION

According to the present disclosure, by the through-hole-shaped holding portion, movement of the exhaust tool is restricted and a gas passage can be ensured, and by severing the cut-in portion not penetrated, the body portion of the exhaust tool can be extracted from the electric apparatus. Thus, gas can be efficiently exhausted while the bus connection portion is assembled.

### BRIEF DESCRIPTION OF THE DRAWINGS

[FIG. 1] FIG. 1 is a schematic view of a lateral side cross-section of a switching device according to embodiment 1.
[FIG. 2] FIG. 2 is a schematic view of a bus connection portion according to embodiment 1.
[FIG. 3] FIG. 3 shows a plan view and a side view of an exhaust tool according to embodiment 1.
[FIG. 4] FIG. 4 is a schematic enlarged view of a tip portion of the exhaust tool according to embodiment 1.
[FIG. 5] FIG. 5 is a schematic enlarged view of the tip portion of the exhaust tool according to embodiment 1.
[FIG. 6] FIG. 6 shows sectional views of the exhaust tool according to embodiment 1, along line M-M in FIG. 3.
[FIG. 7] FIG. 7 is a schematic enlarged view of a part of a body portion of the exhaust tool according to embodiment 1.
[FIG. 8] FIG. 8 shows a plan view and a side view of an exhaust tool according to embodiment 2.
[FIG. 9] FIG. 9 is a schematic enlarged view of a tip portion of the exhaust tool according to embodiment 2.
[FIG. 10] FIG. 10 is a schematic enlarged view of the tip portion of the exhaust tool according to embodiment 2.
[FIG. 11] FIG. 11 shows plan views of a holding portion and a support portion according to embodiment 2.
[FIG. 12] FIG. 12 shows schematic views of a cross-section of the exhaust tool according to embodiment 2.
[FIG. 13] FIG. 13 illustrates an exhaust process according to embodiment 3.

### DESCRIPTION OF EMBODIMENTS

### Embodiment 1

Hereinafter, embodiment 1 will be described with reference to the drawings.

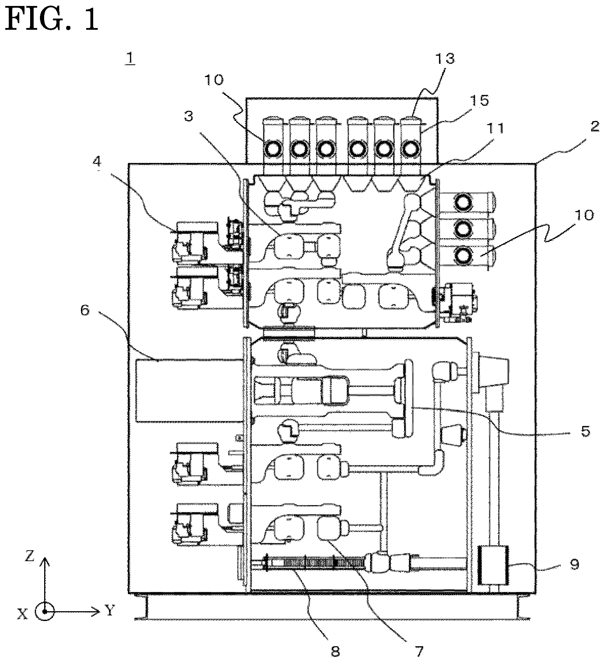

FIG. 1 is a schematic view of a lateral side cross-section of a switching device according to embodiment 1. In FIG. 1, a switching device 1 is a switchgear used for grid operation of power receiving/distributing equipment for power of an electrical substation, for example. In a housing 2 of the switching device 1, for example, a disconnector 3, a disconnector operation mechanism 4 as an operation mechanism therefor, a circuit breaker 5, a circuit breaker operation mechanism 6 as an operation mechanism therefor, a ground switch 7, an arrester 8, and a current transformer 9, are arranged. When abnormal current flows due to a lightning strike or the like, the circuit breaker 5 interrupts a circuit, to prevent the abnormal current from flowing through a grid and protect electric apparatuses connected to the switching device 1. The switching device 1 is provided with a bus connection portion 10, and in an example in FIG. 1, the bus connection portion 10 is connected to a bushing 11, which is then connected to the disconnector 3 in the housing 2. A first electric apparatus 12 and a second electric apparatus 13 described later are, at least partially, included in the bus connection portion 10.

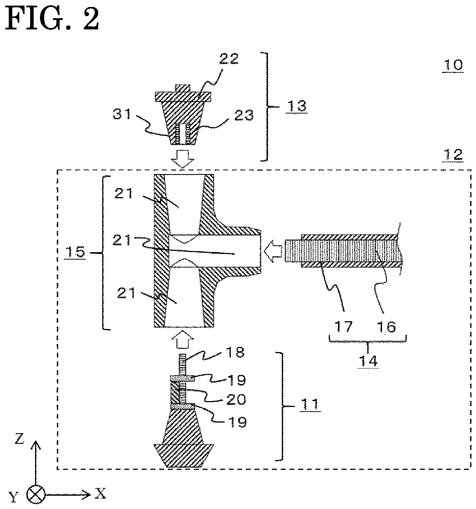

FIG. 2 schematically shows the bus connection portion 10. The first electric apparatus 12 of the bus connection portion 10 includes a bus 14, a connector 15, and the bushing 11. For example, the bus 14 and the bushing 11 are inserted into the connector 15, thus forming the first electric apparatus 12. The first electric apparatus 12 is connected via the bushing 11 to an electric apparatus in the housing 2 of the switching device 1. The bus 14 is formed by a bus conductor 16 and an insulation shield 17 surrounding the periphery of the bus conductor 16. The bushing 11 includes a first tightening portion 18 which is conductive, divided terminals 19, and a conductive member 20. The first tightening portion 18 is a stud bolt having external threads on both sides, for example. The bushing 11 is inserted into an opening 21 of the connector 15 in an arrow direction in FIG. 2, and then the bus 14 is inserted into an opening 21 of the connector 15 in an arrow direction in FIG. 2. When the bus 14 is inserted into the connector 15, an end of the bus conductor 16 is held by the divided terminals 19 of the bushing 11, and a side surface of the bus conductor 16 is held by the conductive member 20.

The second electric apparatus 13 includes an insulating plug 22, and for example, a ground apparatus (not shown). The insulating plug 22 serves to make insulation between the bus 14 and the second electric apparatus 13. The insulating plug 22 has, therein, a second tightening portion 23 which is conductive. The second tightening portion 23 has an internal thread to be fitted to the first tightening portion 18. After the bushing 11 and the bus 14 are inserted into the connector 15 in the arrow directions in FIG. 2, the insulating plug 22 is inserted into the connector 15 in an arrow direction in FIG. 2, and the first tightening portion 18 and the second tightening portion 23 are tightened, whereby the bus connection portion 10 is assembled.

As described above, the bus 14, the bushing 11, and the insulating plug 22 are inserted into the openings 21 of the connector 15, whereby the bus connection portion 10 is formed. In this case, the openings 21 of the connector 15 are closed by the bus 14, the insulating plug 22, and the bushing 11 that are inserted. In particular, when the insulating plug 22 is inserted after the bus 14 and the bushing 11 are inserted, gas is likely to remain between the insulating plug 22 and the connector 15. Gas present near the bus conductor 16 can be a cause of discharge during operation of the switching device 1, leading to insulation deterioration. Therefore, it is necessary to sufficiently exhaust the gas in assembling of the bus connection portion 10.

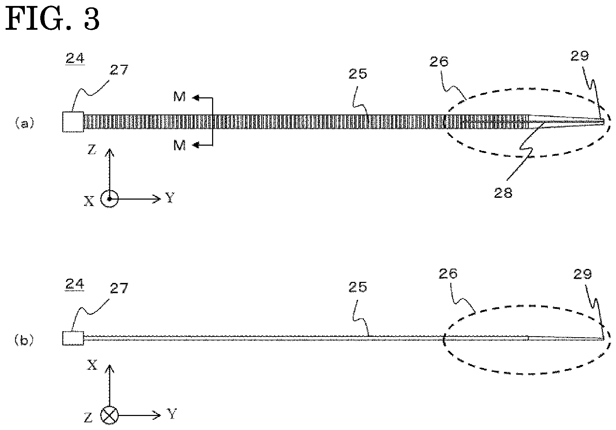

Considering the above, the bus connection portion 10 is assembled while gas is exhausted using an exhaust tool 24 shown in FIG. 3 according to embodiment 1. FIG. 3(a) is a plan view of the exhaust tool 24 and FIG. 3(b) is a side view of the exhaust tool 24. The exhaust tool 24 has a bar-shaped body portion 25, a tip portion 26 provided at an end of the body portion 25, and a base portion 27 provided at another end opposite to the tip portion 26. In the tip portion 26, a hole-shaped holding portion 28 is provided so as to penetrate in an X-axis direction in FIG. 3(a), and at the end side, a cut-in portion 29 is provided adjacently to the holding portion 28. The cut-in portion 29 has a width approximately equal to or smaller than a short-side width (a Z-axis-direction width in FIG. 3(a) and FIG. 3(b)) of the holding portion 28, and is cut in toward a tip end on the side where the tip portion 26 is provided in the exhaust tool 24. The cut-in portion 29 is formed in a valley-like shape by being cut in toward the inner side of the exhaust tool 24, i.e., toward the positive or negative direction of the X axis in FIG. 3(a), and has a thin portion left at the bottom of the valley part.

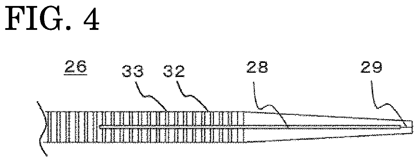

FIG. 4 shows a schematic plan view of the tip portion 26 of the exhaust tool 24, in which the tip portion 26 shown in FIG. 3 is enlarged. The tip portion 26 has the through-hole-shaped holding portion 28, and the cut-in portion 29 which is adjacent to the holding portion 28 and is not penetrated. In FIG. 4, the cut-in portion 29 is cut in along the long-side direction of the body portion 25 toward the end of the tip portion 26. By expanding the hole of the holding portion 28, the first tightening portion 18 is allowed to pass through the holding portion 28, and by tearing the cut-in portion 29, the holding portion 28 can be released from the first tightening portion 18. That is, the penetrated holding portion 28 is put so that the first tightening portion 18 passes therethrough, thereby restricting movement of the exhaust tool 24, and after an exhaust process, the exhaust tool 24 is drawn in a direction away from the first tightening portion 18, so that the cut-in portion 29 can be torn by the first tightening portion 18. Thus, displacement of the exhaust tool 24 is prevented and a gas passage is ensured, and the exhaust tool 24 can be taken out without leaving at least a part of the body portion 25 between the connection surfaces of an inner wall 30 of the connector 15 and an outer wall 31 of the insulating plug 22.

Next, specific operation for assembling the bus connection portion 10 using the exhaust tool 24 described above will be described. First, the holding portion 28 is expanded toward the outer side of the exhaust tool 24, the expanded holding portion 28 is hooked on the first tightening portion 18 of the bushing 11 placed in the connector 15, and the body portion 25 of the exhaust tool 24 is brought into close contact with the inner wall 30 of the connector 15.

In a connection process for the connector 15 and the insulating plug 22, when the inner wall 30 of the connector 15 and the outer wall 31 of the insulating plug 22 are brought into contact with each other, gas surrounded by the connector 15 and the insulating plug 22 has no way to escape, and therefore remains between the connector 15 and the insulating plug 22. This gas is pressurized and compressed by the insulating plug 22 being screwed to the first tightening portion 18 of the bushing 11. Here, between the inner wall 30 of the connector 15 and the insulating plug 22, the exhaust tool 24 whose movement is restricted by the holding portion 28 is interposed and thus a gap is formed. With this gap, a gas passage is ensured and the pressurized gas is exhausted through the gap to the outside of the connector 15. In addition, the holding portion 28 holds the first tightening portion 18 so that movement of the exhaust tool 24 is restricted during assembly of the bus connection portion 10, and thus it is possible to efficiently exhaust the gas without obstructing the gas passage. Accordingly, while remaining of gas between the connector 15 and the insulating plug 22 is inhibited, connection between the first electric apparatus 12 and the second electric apparatus 13 can be made.

Further, shortly before connection between the connector 15 and the insulating plug 22 is completed, or after the completion, the body portion 25 of the exhaust tool 24 is drawn from the connector 15, whereby force acts on the cut-in portion 29 so that the cut-in portion 29 can be torn by the first tightening portion 18. By the cut-in portion 29 being severed, holding of the first tightening portion 18 by the holding portion 28 is released and the exhaust tool 24 can be pulled out from the first electric apparatus 12 without leaving gas therein. Thus, gas surrounded by the connector 15 and the insulating plug 22 is exhausted to the outside of the connector 15, and connection between the first electric apparatus 12 and the second electric apparatus 13 is completed while close contact between the inner wall 30 of the connector 15 and the outer wall 31 of the insulating plug 22 is kept.

Here, the tip width of the tip portion 26 is preferably tapered toward the tip end, as shown in FIG. 4. In a case of such a shape, insertion and extraction of the exhaust tool 24 are facilitated and a drawing force at the time of detachment is less likely to concentrate locally on the exhaust tool 24. Thus, the exhaust tool 24 can be prevented from being partially left inside the connector 15 and between the connection surfaces of the connector 15 and the insulating plug 22.

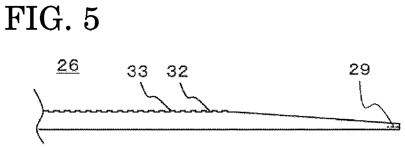

FIG. 5 shows a schematic side view of the tip portion 26 of the exhaust tool 24, in which the tip portion 26 shown in FIG. 3 is enlarged. As shown in FIG. 5, the thickness of the tip portion 26 preferably decreases toward the tip end. The tip portion 26 having such a shape provides effects that the exhaust tool 24 can be attached even to a narrow part and a drawing force at the time of detaching the exhaust tool 24 does not concentrate locally on the exhaust tool 24. A broken line in FIG. 5 represents the cut-in portion 29 seen through a side surface of the exhaust tool 24, and the cut-in portion 29 is provided adjacently to the holding portion 28 so as to have a thin portion remaining as shown by the broken line.

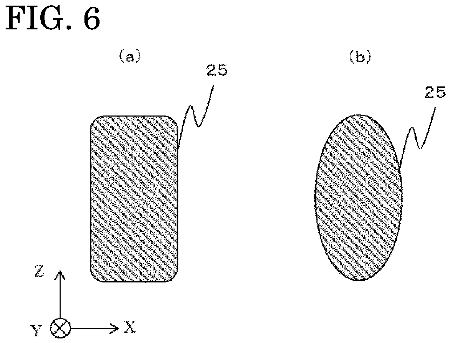

FIG. 6 shows examples of a cross-section along line M-M in FIG. 3(a), i.e., the sectional shape of the body portion 25. The sectional shape of the body portion 25 may be a rectangular shape with rounded corners as shown in FIG. 6(a), or an oval shape as shown in FIG. 6(b), for example. Here, the oval shape includes a circle and an elliptic shape. Although not shown, the sectional shape may be a polygonal shape with rounded corners. Thus, by forming the sectional shape of the body portion 25 as a rounded-corner shape, it becomes possible to exhaust gas without damaging the inner wall 30 of the connector 15 and the outer wall 31 of the insulating plug 22. In addition, even when the radial-direction dimensions of the connector 15 and the insulating plug 22 are small, a necessary strength can be ensured against an insertion/extraction force at the time of inserting/extracting the exhaust tool 24.

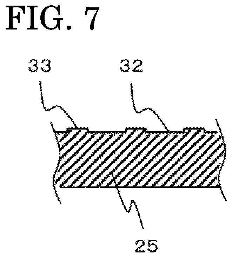

FIG. 7 is an enlarged view of a part of the body portion 25. As shown in FIG. 7, recesses 32 and projections 33 may be formed on the body portion 25. For example, the recesses 32 and the projections 33 may be provided over a range from the body portion 25 to the tip portion 26 of the exhaust tool 24 so as to traverse in the short-side direction. The recesses 32 and the projections 33 may traverse over a partial range in the short-side direction instead of the entire range. The recesses 32 and the projections 33 may be provided on only one surface or on a plurality of surfaces. The recesses 32 and the projections 33 may be arranged in a dotted manner instead of traversing.

By providing the recesses 32 and the projections 33 as described above, it is possible to perform the exhaust process without hindering flow of an insulating lubricant such as paste or oil applied to the inner wall 30 of the connector 15 and the outer wall 31 of the insulating plug 22 at the time of connecting the connector 15 and the insulating plug 22.

The exhaust tool 24 may be made from a flexible and lubricating material such as fluororesin, for example. The exhaust tool 24 may be made from polypropylene resin, polyamide resin, polyether ether ketone resin, or polyacetal resin. The exhaust tool 24 may be formed by impregnating a polyamide fiber with polypropylene resin. By using a composite material obtained by impregnating a reinforced fiber such as a polyamide fiber with resin, the strength can be ensured and thus damage and breakage are prevented when the exhaust tool 24 is extracted, whereby a part thereof can be prevented from being left between the connection surfaces of the inner wall 30 of the connector 15 and the outer wall 31 of the insulating plug 22.

For the connector 15, for example, a deformable and restorable material such as silicone resin or ethylene propylene rubber may be used so that the exhaust tool 24 can be interposed between the connection surfaces of the inner wall 30 of the connector 15 and the outer wall 31 of the insulating plug 22.

As described above, the exhaust tool 24 having the through-hole-shaped holding portion 28 and the cut-in portion 29 not penetrated is used in assembly of the bus connection portion 10, whereby movement of the exhaust tool 24 is restricted and a gas passage is ensured while gas can be efficiently exhausted. After the gas is sufficiently exhausted, the cut-in portion 29 is severed and thus the exhaust tool 24 can be extracted. Therefore, the gas in the bus connection portion 10 can be assuredly exhausted.

The present embodiment has shown the case where the connector 15 has the openings 21 in three ways and one of the openings 21 is closed by the bushing 11. However, without using the bushing 11, the connector may be configured such that the openings 21 are provided in two ways with one opening closed and the first tightening portion 18 is provided inside.

### Embodiment 2

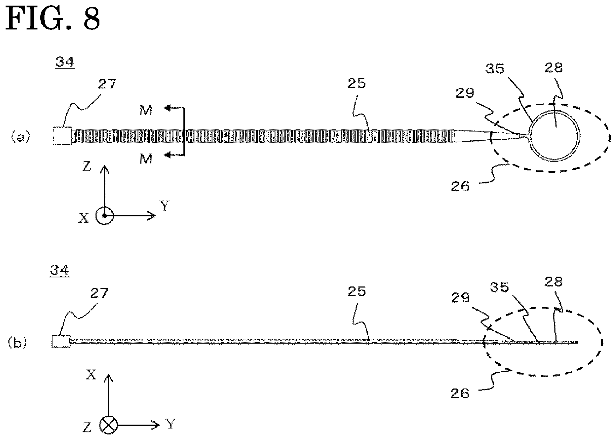

FIG. 8 shows an exhaust tool according to embodiment 2. The same components as in embodiment 1 are denoted by the same reference characters and the description thereof is omitted.

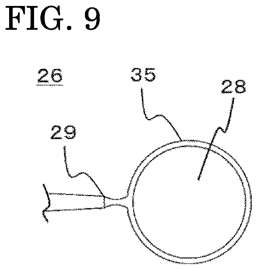

In FIG. 8, FIG. 8(a) is a plan view of an exhaust tool 34 and FIG. 8(b) is a side view of the exhaust tool 34. The exhaust tool 34 according to embodiment 2 includes the bar-shaped body portion 25 and the tip portion 26 provided at the end of the body portion 25. As shown in FIG. 9 which is an enlarged view of the tip portion 26 in FIG. 8, the tip portion 26 has the hole-shaped holding portion 28 through which the first tightening portion 18 can pass and which is provided so as to penetrate in the X-axis direction in FIG. 8. The periphery of the holding portion 28 is surrounded by a support portion 35. Unlike embodiment 1, it is not necessary to expand the hole in the short-side direction of the exhaust tool 34 so as to allow the first tightening portion 18 to pass therethrough.

FIG. 9 shows a schematic plan view of the tip portion 26 of the exhaust tool 34, in which the tip portion 26 shown in FIG. 8 is enlarged. As shown in FIG. 9, the cut-in portion 29 is provided between the body portion 25 and the support portion 35. The cut-in portion 29 is provided at the outer edge of the support portion 35 adjacently to the holding portion 28, and is cut in along the short-side direction of the body portion 25. When the body portion 25 and the support portion 35 are pulled in directions opposite to each other, the cut-in portion 29 not penetrated is torn and thus the body portion 25 and the support portion 35 can be separated with the cut-in portion 29 as a boundary.

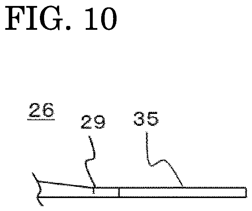

FIG. 10 shows a schematic side view of the tip portion 26 of the exhaust tool 34, in which the tip portion 26 shown in FIG. 8 is enlarged. The tip portion 26 is formed such that the thickness thereof decreases toward the tip end, and the end of the tip portion 26 is thinnest.

In a case of assembling the bus connection portion 10 using the exhaust tool 34, a lubricant is applied in advance to the inner wall 30 of the connector 15 and the outer wall 31 of the insulating plug 22 which are the connection surfaces of the first electric apparatus 12 and the second electric apparatus 13. Thereafter, the holding portion 28 of the exhaust tool 34 is hooked on the first tightening portion 18 in the first electric apparatus 12, and the body portion 25 of the exhaust tool 34 is brought into close contact with the inner wall 30 of the first electric apparatus 12, thus making preparation before assembly.

Then, as in embodiment 1, the first electric apparatus 12 and the second electric apparatus 13 are assembled while positional displacement of the exhaust tool 34 is prevented by the holding portion 28. Shortly before completion of the assembly, or after the completion, the base portion 27 is pulled so as to draw the exhaust tool 34 from the connector 15, whereby the cut-in portion 29 provided between the body portion 25 and the support portion 35 of the exhaust tool 34 is torn and the body portion 25 and the support portion 35 are separated. Thus, the body portion 25 can be extracted to the outside of the connector 15. Although the support portion 35 is left between the first electric apparatus 12 and the second electric apparatus 13, the surrounding space around the support portion 35 is at the same potential and therefore there is no electrical problem.

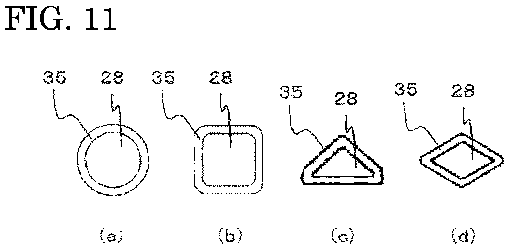

The through-hole-shaped holding portion 28 and the support portion 35 supporting the holding portion 28 may be formed in various shapes such as a circle, a quadrangle with rounded corners, a triangle with rounded corners, and a rhombus with rounded corners as shown in FIG. 11. Thus, the shape of the support portion 35 may be changed so as to be appropriate for insertion and extraction of the exhaust tool 34.

For example, if the support portion 35 has a polygonal shape, a frictional force acting on corners of the support portion 35 becomes smaller than in a case of having a shape with no corners, and thus the polygonal shape is more appropriate for insertion and extraction of the exhaust tool 34. If the support portion 35 has a rounded-corner shape or an elliptic shape including a circle, damage of the connector 15 and the insulating plug 22 can be prevented at the time of inserting/extracting the exhaust tool 34.

As described above, the exhaust tool 34 having the through-hole-shaped holding portion 28, the cut-in portion 29 not penetrated, and the support portion 35 is used in assembly of the bus connection portion 10, whereby movement of the exhaust tool 34 is restricted and a gas passage is ensured while gas can be efficiently exhausted. After the gas is sufficiently exhausted, the cut-in portion 29 is severed to separate the body portion 25 and the support portion 35, and thus the body portion 25 can be easily extracted. Therefore, the gas in the bus connection portion 10 can be assuredly exhausted.

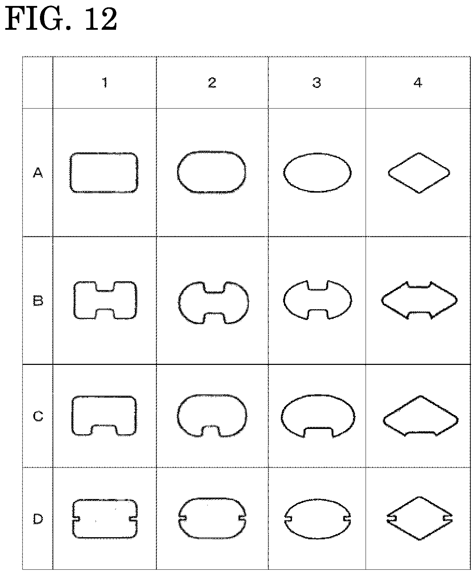

Embodiment 1 has shown the case where the sectional shape of the body portion 25 is a rectangular shape with rounded corners or an oval shape. However, sectional shapes shown in FIG. 12 may be employed. Each sectional shape in FIG. 12 corresponds to the sectional shape along line M-M in FIG. 3 or FIG. 8. In FIG. 12, sectional shapes of the body portion 25 are shown in cells arranged in columns and rows. The features of the columns are as follows: in column 1, the outer shape is a quadrangular shape with rounded corners; in column 2, the outer shape is an oblong shape; in column 3, the outer shape is an elliptic shape; and in column 4, the outer shape is a rhombus. The features of the rows are as follows: in row A, there are no grooves on the surface; in row B, the upper and lower surfaces have grooves extending from the base portion 27 to the tip portion 26; in row C, one surface has a groove extending from the base portion 27 to the tip portion 26; and in row D, both side surfaces of the body portion 25 have grooves extending from the base portion 27 to the tip portion 26.

The sectional shape of the body portion 25 can be selected from various shapes as shown in FIG. 12. Thus, the sectional shape of the body portion 25 may be changed so as to be appropriate for insertion and extraction of the exhaust tool 24 or the exhaust tool 34. If the sectional shape of the body portion 25 is a polygonal shape, the contact areas where the surface of the body portion 25 contacts with the inner wall 30 and the outer wall 31 are increased as compared to a case where the surface of the body portion 25 has a curved shape, and therefore the body portion 25 can be prevented from being displaced so as to follow rotation of the insulating plug 22. If the sectional shape of the body portion 25 is a rounded-corner shape or an oval shape, damage of the connector 15 and the insulating plug 22 can be prevented at the time of inserting/extracting the exhaust tool 24 or the exhaust tool 34. If the body portion 25 has a groove extending from the tip portion 26 to the base portion 27 as shown in rows B, C, D in FIG. 12, a gap formed between the connection surfaces of the connector 15 and the insulating plug 22 when the exhaust tool 24 or the exhaust tool 34 is interposed, is enlarged. Thus, the gas remaining between the connector 15 and the insulating plug 22 can be sufficiently exhausted.

### Embodiment 3

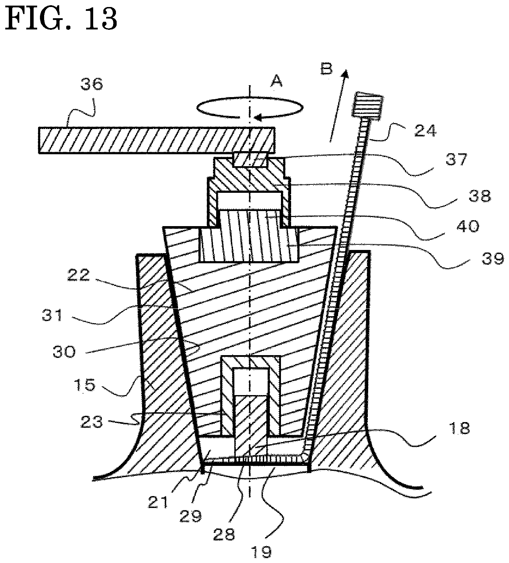

With reference to FIG. 13, the exhaust process using the exhaust tool 24 according to embodiment 1 in manufacturing of the switching device 1 will be described. The bus connection portion 10 of the switching device 1 shown in FIG. 1 includes at least parts of the first electric apparatus 12 and the second electric apparatus 13 as shown in FIG. 2, the first electric apparatus 12 is composed of the bushing 11, the bus 14, and the connector 15, and the second electric apparatus 13 is composed of the insulating plug 22 and the ground apparatus (not shown) connected to the insulating plug 22.

The first electric apparatus 12 is formed by inserting the bus 14 and the bushing 11 into the openings 21 of the connector 15. The bushing 11 is inserted into the opening 21 of the connector 15 so that one opening 21 is closed. After the bushing 11 is inserted, the bus 14 is inserted into another opening 21 of the connector 15 so that the opening 21 is closed. The bushing 11 includes the first tightening portion 18, the divided terminal 19, and the conductive member 20. The bus 14 is formed by the bus conductor 16 and the insulation shield 17 surrounding the periphery thereof, and the bus conductor 16 is exposed at the end of the bus 14. When the bus conductor 16 is inserted, the end of the inserted bus 14 is held from the upper and lower sides by the divided terminals 19 of the bushing 11, and the side part of the end of the bus 14 is supported by the conductive member 20. By contact with the divided terminals 19 and the conductive member 20, the bus 14 and the bushing 11 are electrically connected, so that another electric apparatus provided to the switching device 1 and connected to the bushing 11, and the first electric apparatus 12, are electrically connected. Since the openings 21 into which the bushing 11 and the bus 14 are inserted are closed, the gas passages are closed.

In the first electric apparatus 12, after the above connection process, the first tightening portion 18 provided in the bushing 11 protrudes inside the connector 15 toward the opening 21 of the connector 15 which is not closed by the bus 14 and the bushing 11. The first tightening portion 18 is, for example, a stud bolt having external threads on both sides, and the first tightening portion 18 and a tightening portion of another electric apparatus are fitted to each other, whereby the first electric apparatus 12 and the other electric apparatus are connected. In the present embodiment, the tightening portion of the other electric apparatus is the second tightening portion 23, and the other electric apparatus is the second electric apparatus 13. The second tightening portion 23 provided inside the insulating plug 22 and the first tightening portion 18 are fitted to each other, whereby the first electric apparatus 12 and the second electric apparatus 13 are connected.

Next, with reference to FIG. 13, an exhaust procedure in the connection process for the first electric apparatus 12 and the second electric apparatus 13 will be described. In advance, an insulating lubricant is applied to the connection surfaces of the inner wall 30 of the connector 15 and the outer wall 31 of the insulating plug 22 which are the connection surfaces of the first electric apparatus 12 and the second electric apparatus 13. For example, grease is used as the lubricant.

Then, as shown in FIG. 13, the exhaust tool 24 is placed in the opening 21 along the inner wall 30 of the connector 15, and the holding portion 28 of the exhaust tool 24 is put so that the first tightening portion 18 passes therethrough. Thus, the exhaust tool 24 is mounted in the opening 21. In a case where the exhaust tool 24 having the holding portion 28 in a closed state is used, the holding portion 28 is pulled outward of the exhaust tool 24 to expand the through hole so that the first tightening portion 18 can be inserted into the holding portion 28.

After the exhaust tool 24 is mounted in the opening 21, the inner wall 30 of the connector 15 provided to the first electric apparatus 12 and the outer wall 31 of the insulating plug 22 provided to the second electric apparatus 13 are fitted to each other, so that the exhaust tool 24 is interposed between their connection surfaces. Here, the inner wall 30 and the outer wall 31 have such dimensions as to closely contact with each other when fitted.

Inside the insulating plug 22, the second tightening portion 23 having an internal thread on the inner side is provided at one end in the direction of a driving shaft 37. In addition, a rotation member 39 for rotating the insulating plug 22 is provided at the other end in the direction of the driving shaft 37. Here, the rotation member 39 has, for example, a hexagonal portion 40 for rotation, at an end thereof. By rotating the insulating plug 22 using a torque wrench 36 having the driving shaft 37 and a socket 38, the first electric apparatus 12 and the second electric apparatus 13 are connected.

Inside the first electric apparatus 12, the divided terminal 19 connected to the bus 14 of the switching device 1 is provided. At an end of the divided terminal 19, the first tightening portion 18 having an external thread on the outer circumference thereof is provided so as to protrude toward the second electric apparatus 13. With the insulating plug 22 inserted into the connector 15, when the insulating plug 22 is rotated in a direction A in FIG. 13 (clockwise direction as seen from the upper side of the torque wrench 36), the insulating plug 22 is driven in a direction to be inserted into the connector 15, so that the first tightening portion 18 and the second tightening portion 23 are tightened.

Through the process of inserting the insulating plug 22, the inner wall 30 of the connector 15 and the outer wall 31 of the insulating plug 22 come close to each other and then closely contact with each other. Since the inner wall 30 of the connector 15 and the outer wall 31 of the insulating plug 22 closely contact with each other, gas present at the close-contact part is surrounded by the connector 15 and the insulating plug 22 and thus has no way to escape.

After the above process, the insulating plug 22 is further rotated by the torque wrench 36 so as to be screwed into the connector 15, whereby the gas remaining between the connector 15 and the insulating plug 22 is compressed. As the insulating plug 22 is rotated by the torque wrench 36, the compressed gas moves in the circumferential direction of the outer wall 31 of the insulating plug 22, so as to gather in the gap formed by the exhaust tool 24 interposed between the inner wall 30 of the connector 15 and the outer wall 31 of the insulating plug 22. The gas gathering in the gap is exhausted through the gap to the outside.

Then, shortly before connection of the first electric apparatus 12 and the second electric apparatus 13 is completed, or after the completion, the exhaust tool 24 is drawn in a direction to be extracted from the connector 15, i.e., a direction B in FIG. 13. By the drawing force, the cut-in portion 29 of the exhaust tool 24 is torn, so that the body portion 25 can be extracted. Then, after the cut-in portion 29 is severed, the body portion 25 is extracted from the connector 15, and thus connection between the first electric apparatus 12 and the second electric apparatus 13 is completed while close contact between the inner wall 30 of the connector 15 and the outer wall 31 of the insulating plug 22 is kept.

That is, the exhaust tool 24 is placed along the inner wall 30 of the connector 15, and the through-hole-shaped holding portion 28 is put so that the first tightening portion 18 inside the connector 15 passes therethrough. Then, the first tightening portion 18 and the second tightening portion 23 are fitted to each other and the insulating plug 22 is rotated with the body portion 25 interposed between the inner wall 30 of the connector 15 and the outer wall 31 of the insulating plug 22, so that gas between the connector 15 and the insulating plug 22 is exhausted through a gap formed by the body portion 25 interposed between the insulating plug 22 and the connector 15, and the first tightening portion 18 and the second tightening portion 23 are tightened. Then, while the exhaust tool 24 is drawn from the connector 15, the cut-in portion 29 is severed and the body portion 25 is extracted from the connector 15. Thus, it is possible to efficiently exhaust gas while assembling the bus connection portion 10 provided to the switching device 1.

The present embodiment has shown the case of using the exhaust tool 24 according to embodiment 1. However, the same effects can be obtained even in a case of using the exhaust tool 34 described in embodiment 2 to perform the exhaust process in manufacturing of the switching device 1. In this case, in the process of drawing the exhaust tool 34, the support portion 35 and the body portion 25 are separated and the support portion 35 is left in the connector 15.

Embodiments 1 to 3 have shown the case of connecting the first electric apparatus 12 and the second electric apparatus 13, but may be applied to another electric apparatus in the switching device 1 or an external electric apparatus connected to the switching device 1.

It is noted that, within the scope of the present disclosure as defined in the claims, the embodiments described in the present disclosure may be freely combined with each other, or each of the embodiments may be modified or simplified as appropriate.

### DESCRIPTION OF THE REFERENCE CHARACTERS

- 1: switching device
- 2: housing
- 3: disconnector
- 4: disconnector operation mechanism
- 5: circuit breaker
- 6: circuit breaker operation mechanism
- 7: ground switch
- 8: arrester
- 9: current transformer
- 10: bus connection portion
- 11: bushing
- 12: first electric apparatus
- 13: second electric apparatus
- 14: bus
- 15: connector
- 16: bus conductor
- 17: insulation shield
- 18: first tightening portion
- 19: divided terminal
- 20: conductive member
- 21: opening
- 22: insulating plug
- 23: second tightening portion
- 24, 34: exhaust tool
- 25: body portion
- 26: tip portion
- 27: base portion
- 28: holding portion
- 29: cut-in portion
- 30: inner wall
- 31: outer wall
- 32: recess
- 33: projection
- 35: support portion
- 36: torque wrench
- 37: driving shaft
- 38: socket
- 39: rotation member
- 40: hexagonal portion

## Claims

1. An exhaust tool (24) comprising:
a bar-shaped body portion (25); and
a tip portion (26) provided at an end of the body portion (25),
**characterized in that** the exhaust tool (24) further comprises:
a through-hole-shaped holding portion (28) which is provided at the tip portion (26) and is configured to restrict movement of the body portion (25) by being configured to be put so that a first tightening portion (18) placed inside an insulating connector (15) of a first electric apparatus (12) having a bus (14) and the connector (15) passes through the holding portion (28); and
a cut-in portion (29) which is not configured to be penetrated and is cut in adjacently to the holding portion (28), the cut-in portion (29) being formed in a valley-like shape by being cut in toward the inner side of the exhaust tool (24), the cut-in portion (29) having a thin portion left at the bottom of the valley part, wherein the cut-in portion (29) is configured to be torn by the first tightening portion (18) when the exhaust tool (24) is drawn in a direction away from the first tightening portion (18).

2. The exhaust tool (24) according to claim 1, wherein
the cut-in portion (29) is cut in along a long-side direction of the body portion (25).

3. The exhaust tool (34) according to claim 1, wherein
the holding portion (28) is provided so as to be surrounded by a support portion (35), and
the cut-in portion (29) is cut in along a short-side direction of the body portion (25), between the support portion (35) and the body portion (25).

4. The exhaust tool (34) according to claim 3, wherein
the holding portion (28) is a through hole having a polygonal or circular sectional shape.

5. The exhaust tool (24) according to any one of claims 1 to 4, wherein
the sectional shape of the body portion (25) is a polygonal shape with rounded corners, or an oval shape.

6. The exhaust tool (24) according to any one of claims 1 to 5, wherein
the body portion (25) has recesses (32) and projections (33) on at least one surface thereof.

7. The exhaust tool (24) according to any one of claims 1 to 6, wherein
the body portion (25) has a groove along a long-side direction thereof.

8. The exhaust tool (24) according to any one of claims 1 to 7, wherein
the body portion (25) is made of flexible resin.

9. The exhaust tool (24) according to any one of claims 1 to 8, wherein
at least one of a thickness and a width of the tip portion (26) decreases toward a tip end.

10. A switching device (1) manufacturing method comprising the steps of:
along an inner wall (30) of an insulating connector (15) provided to a first electric apparatus (12) having a bus (14), putting the holding portion (28) of the exhaust tool (24, 34) according to any one of claims 1 to 9, so that a first tightening portion (18) inside the connector (15) connected to the bus (14) passes through the holding portion (28);
fitting the first tightening portion (18) and a second tightening portion (23) provided in an insulating plug (22) of a second electric apparatus (13) to each other and rotating the insulating plug (22) with the body portion (25) of the exhaust tool (24, 34) interposed between the inner wall (30) of the connector (15) and an outer wall (31) of the insulating plug (22), so as to exhaust gas between the connector (15) and the insulating plug (22) through a gap formed by the body portion (25) interposed between the connector (15) and the insulating plug (22), and tighten the first tightening portion (18) and the second tightening portion (23); and
while drawing the exhaust tool (24, 34) from the connector (15), severing the cut-in portion (29) of the exhaust tool (24, 34) and extracting the body portion (25) from the connector (15).

## Patentansprüche

1. Entlüftungswerkzeug (24), das aufweist:
einen stangenförmigen Körperabschnitt (25); und
einen Spitzenabschnitt (26), der an einem Ende des Körperabschnitts (25) vorgesehen ist,
**dadurch gekennzeichnet, dass** das Entlüftungswerkzeug (24) ferner aufweist:
einen durchgangslochförmigen Halteabschnitt (28), der bei dem Spitzenabschnitt (26) vorgesehen ist und der eingerichtet ist, eine Bewegung des Körperabschnitts (25) zu beschränken, indem er eingerichtet ist, so positioniert zu werden, dass ein erster Festziehabschnitt (18), der innerhalb eines isolierenden Verbindungselements (15) einer ersten elektrischen Vorrichtung (12) platziert ist, die ein Bus (14) und das Verbindungselement (15) aufweist, durch den Halteabschnitt (28) verläuft; und
einen Einschnittabschnitt (29), der eingerichtet ist, dass nicht in ihn eingedrungen werden kann, und der benachbart zum Halteabschnitt (28) eingeschnitten ist, wobei der Einschnittabschnitt (29) zur Innenseite des Entlüftungswerkzeugs (24) hin talförmig ausgebildet ist, wobei der Einschnittabschnitt (29) einen dünnen Abschnitt aufweist, der am Boden des Talteils verbleibt, wobei der Einschnittabschnitt (29) eingerichtet ist, durch den ersten Festziehabschnitt (18) zerrissen zu werden, wenn das Entlüftungswerkzeug (24) in einer Richtung von dem ersten Festziehabschnitt (18) weg gezogen wird.

2. Entlüftungswerkzeug (24) nach Anspruch 1, wobei
der Einschnittabschnitt (29) entlang einer Langseitenrichtung des Körperabschnitts (25) eingeschnitten ist.

3. Entlüftungswerkzeug (34) nach Anspruch 1, wobei
der Halteabschnitt (28) so vorgesehen ist, dass er von einem Stützabschnitt (35) umgeben ist, und
der Einschnittabschnitt (29) entlang einer Kurzseitenrichtung des Körperabschnitts (25) zwischen dem Stützabschnitt (35) und dem Körperabschnitt (25) eingeschnitten ist.

4. Entlüftungswerkzeug (34) nach Anspruch 3, wobei
der Halteabschnitt (28) ein Durchgangsloch mit einer polygonalen oder kreisförmigen Querschnittsform ist.

5. Entlüftungswerkzeug (24) nach einem der Ansprüche 1 bis 4, wobei
die Querschnittsform des Körperabschnitts (25) eine polygonale Form mit abgerundeten Ecken oder eine ovale Form ist.

6. Entlüftungswerkzeug (24) nach einem der Ansprüche 1 bis 5, wobei
der Körperabschnitt (25) Vertiefungen (32) und Vorsprünge (33) an zumindest einer Fläche davon aufweist.

7. Entlüftungswerkzeug (24) nach einem der Ansprüche 1 bis 6, wobei
der Körperabschnitt (25) eine Nut entlang einer Langseitenrichtung davon aufweist.

8. Entlüftungswerkzeug (24) nach einem der Ansprüche 1 bis 7, wobei der Körperabschnitt (25) aus einem flexiblen Harz hergestellt ist.

9. Entlüftungswerkzeug (24) nach einem der Ansprüche 1 bis 8, wobei
eine Dicke und/oder eine Breite des Spitzenabschnitts (26) in Richtung eines Spitzenendes abnimmt.

10. Verfahren zum Herstellen einer Schaltvorrichtung (1), das die Schritte aufweist:
entlang einer Innenwand (30) eines isolierenden Verbindungselements (15), das für eine erste elektrische Vorrichtung (12) mit einem Bus (14) vorgesehen ist, Positionieren des Halteabschnitts (28) des Entlüftungswerkzeugs (24, 34) gemäß einem der Ansprüche 1 bis 9, so dass ein erster Festziehabschnitt (18) innerhalb des Verbindungselements (15), das mit dem Bus (14) verbunden ist, durch den Halteabschnitt (28) verläuft;
aneinander Anpassen des ersten Festziehabschnitts (18) und eines zweiten Festziehabschnitts (23), der in einem Isolierstecker (22) einer zweiten elektrischen Vorrichtung (13) vorgesehen ist, und Drehen des Isoliersteckers (22), wobei der Körperabschnitt (25) des Entlüftungswerkzeugs (24, 34) zwischen der Innenwand (30) des Verbindungselements (15) und einer Außenwand (31) des Isoliersteckers (22) angeordnet ist, um so Gas zwischen dem Verbindungselement (15) und dem Isolierstecker (22) durch einen Spalt zu entlüften, der durch den Körperabschnitt (25) ausgebildet ist, der zwischen dem Verbindungselement (15) und dem Isolierstecker (22) angeordnet ist, und Festziehen des ersten Festziehabschnitts (18) und des zweiten Festziehabschnitts (23); und
während das Entlüftungswerkzeug (24, 34) aus dem Verbindungselement (15) gezogen wird, Durchtrennen des Einschnittabschnitts (29) des Entlüftungswerkzeugs (24, 34) und Herausziehen des Körperabschnitts (25) aus dem Verbindungselement (15).

## Revendications

1. Outil d'évacuation (24) comprenant :
une partie corps en forme de barre (25) ; et
une partie pointe (26) fournie au niveau d'une extrémité de la partie corps (25),
**caractérisé en ce que** l'outil d'évacuation (24) comprend en outre :
une partie de maintien en forme de trou traversant (28), qui est fournie au niveau de la partie de pointe (26) et est conçue pour restreindre le déplacement de la partie corps (25) en étant conçue pour être placée de sorte qu'une première partie de serrage (18) placée à l'intérieur d'un connecteur isolant (15) d'un premier appareil électrique (12) ayant un bus (14) et le connecteur (15) passe à travers la partie de maintien (28) ; et
une partie découpée (29) qui n'est pas conçue pour être pénétrée et qui est découpée à côté de la partie de maintien (28), la partie découpée (29) étant formée en forme de creux en étant découpée vers le côté interne de l'outil d'évacuation (24), la partie découpée (29) ayant une partie mince laissée au fond de la partie creuse, dans lequel la partie découpée (29) est conçue pour être déchirée par la première partie de serrage (18) lorsque l'outil d'évacuation (24) est tiré dans une direction opposée à la première partie de serrage (18).

2. Outil d'évacuation (24) selon la revendication 1, dans lequel
la partie découpée (29) est découpée le long d'une direction du côté long de la partie corps (25).

3. Outil d'évacuation (34) selon la revendication 1, dans lequel
la partie de maintien (28) est prévue pour être entourée d'une partie de support (35), et
la partie découpée (29) est découpée le long d'une direction du côté court de la partie corps (25), entre la partie de support (35) et la partie corps (25).

4. Outil d'évacuation (34) selon la revendication 3, dans lequel
la partie de maintien (28) est un trou traversant de forme de section polygonale ou circulaire.

5. Outil d'évacuation (24) selon l'une quelconque des revendications 1 à 4, dans lequel
la forme de section de la partie corps (25) est une forme polygonale avec des coins arrondis, ou une forme ovale.

6. Outil d'évacuation (24) selon l'une quelconque des revendications 1 à 5, dans lequel
la partie corps (25) a des évidements (32) et des saillies (33) sur au moins une surface de celle-ci.

7. Outil d'évacuation (24) selon l'une quelconque des revendications 1 à 6, dans lequel
la partie corps (25) a une rainure le long d'une dicrection du côté long de celle-ci.

8. Outil d'évacuation (24) selon l'une quelconque des revendications 1 à 7, dans lequel
la partie corps (25) est en résine souple.

9. Outil d'évacuation (24) selon l'une quelconque des revendications 1 à 8, dans lequel
au moins l'une parmi une épaisseur et une largeur de la partie pointe (26) diminue vers une extrémité de la pointe.

10. Procédé de fabrication d'un dispositif de commutation (1) comprenant les étapes consistant à :
le long d'une paroi interne (30) d'un connecteur isolant (15) fourni à un premier appareil électrique (12) ayant un bus (14), placer la partie de maintien (28) de l'outil d'évacuation (24, 34) selon l'une quelconque des revendications 1 à 9, de sorte qu'une première partie de serrage (18) à l'intérieur du connecteur (15) connecté au bus (14) passe à travers la partie de maintien (28) ;
ajuster l'une à l'autre la première partie de serrage (18) et une seconde partie de serrage (23) fournie dans un embout isolant (22) d'un second appareil électrique (13) et faire tourner l'embout isolant (22) avec la partie corps (25) de l'outil d'évacuation (24, 34) interposé entre la paroi interne (30) du connecteur (15) et une paroi externe (31) de l'embout isolant (22), de manière à évacuer un gaz entre le connecteur (15) et l'embout isolant (22) à travers un espace formé par la partie corps (25) interposée entre le connecteur (15) et l'embout isolant (22), et à serrer la première partie de serrage (18) et la seconde partie de serrage (23) ; et
pendant le retrait de l'outil d'évacuation (24, 34) du connecteur (15), sectionner la partie découpée (29) de l'outil d'évacuation (24, 34) et extraire la partie corps (25) du connecteur (15).
